# EUROPEAN PATENT APPLICATION

(11) **EP 2 018 940 A2**
(43) Date of publication of application: **28.01.2009**
(21) Application number: 08009956.7
(22) Date of filing: 30.05.2008
(51) Int. Cl.: B25J 9/16

(54) **Flexible workpiece assembling method**

(30) Priority: 23.07.2007 JP 2007191355
(71) Applicant: Fanuc Ltd, Yamanashi 401-0597 (JP)
(72) Inventor: Hariki, Kazuo, Minamitsuru-gun Yamanashi 401-0597 (JP); Oda, Masaru, Minamitsuru-gun Yamanashi 401-0597 (JP); Kajio, Shigenori, Minamitsuru-gun Yamanashi 401-0597 (JP); Nihei, Ryo, Minamitsuru-gun Yamanashi 401-0597 (JP)
(74) Representative: Thum, Bernhard

(57) **Abstract**

A flexible workpiece assembling method for assembling a flexible workpiece (W) with an object (60) by using a first robot (20) comprising a first hand (21) and a second robot (30) comprising a second hand (31) includes the steps of: gripping a first portion of the flexible workpiece by the first hand and gripping a second portion of the flexible workpiece different from the first portion by the second hand; moving the flexible workpiece to the object through a cooperating operation of the first and second robots; deforming the flexible workpiece into a shape corresponding to the nonflexible object by the first and second robots; and assembling the flexible workpiece onto the nonflexible object by the first and second robots. As a result, the flexible workpiece can be accurately assembled onto the nonflexible object without breaking or tearing. The first and second robots may comprise a pushing means for pushing the flexible workpiece into the object.

## Description

### BACKGROUND OF THE INVENTION

### 1. Field of the Invention

The present invention relates to a flexible workpiece assembling method for assembling a flexible workpiece onto a nonflexible object by using two robots equipped with hands.

### 2. Description of the Related Art

Generally, an assembling operation of a flexible workpiece such as a resin molded article and the like is performed assuming that the flexible workpiece is deformed and assembled on a nonflexible object. Therefore, it is difficult to accurately perform the assembling operation of such a flexible workpiece by using a machine. Further, even if a specified machine can perform the assembling operation of the flexible workpiece automatically, such machine may be too big and there is also a tendency for the machine to be expensive and may not be versatile. As a result, the assembling operation of the flexible workpiece is typically performed by a manual operation.

Japanese Unexamined Patent Publication No. 8-174460 discloses a technique that allows a robot to assemble a relatively large flexible workpiece such as a duct unit, which has to be deformed during the assembling operation, onto an instrument panel. In Japanese Unexamined Patent Publication No. 8-174460, when the flexible workpiece interferes with the instrument panel, a movement correction amount of a robot arm is determined based on a detection value of a force sensor, it is determined whether the arm position after the correction is within a predetermined movable range or not, and then when the robot position after the correction is within the movable range, the movement of the robot arm is corrected by the movement correction amount.

Japanese Unexamined Patent Publication No. 8-174460 assumes that the relatively large flexible workpiece such as the duct unit and the like is assembled, and though it is referred to as "flexible", such a workpiece is relatively strong. However, in the case of a flexible workpiece that is relatively small and easy to bend such as, for example, a rubber hose, even if the movement correction amount is determined based on the detection value of the force sensor as disclosed in Japanese Unexamined Patent Publication No. 8-174460, this movement correction amount may not always be accurate.

In such a case, the flexible workpiece may not be able to be accurately assembled onto a nonflexible object and, in addition, the flexible workpiece may be broken or torn when it is transferred. Therefore, when the flexible workpiece is relatively small and easy to bend, more delicate control is required.

The present invention has been made in view of such circumstances and it is an object of the present invention is to provide a flexible workpiece assembling method that can accurately assemble a flexible workpiece onto a nonflexible object without breaking or tearing off even when the flexible workpiece is relatively small and easy to bend.

### SUMMARY OF THE INVENTION

In order to accomplish the above object, according to a first aspect, there is provided a flexible workpiece assembling method for assembling a flexible workpiece onto a nonflexible object by using a first robot comprising a first hand and a second robot comprising a second hand, the method comprising the steps of: gripping a first portion of the flexible workpiece by the first hand of the first robot and gripping a second portion of the flexible workpiece different from the first portion by the second hand of said second robot; moving the flexible workpiece to the object by enabling a cooperating operation of the first robot and the second robot; deforming the flexible workpiece into a shape corresponding to the object by changing positions and orientations of the first robot and the second robot independently of each other while the cooperating operation of the first robot and the second robot is disabled; and assembling the flexible workpiece with the object by the first robot and the second robot.

Thus, in the first aspect, because the cooperating operation of the first robot and the second robot is used, the flexible workpiece can be transferred without breaking or tearing. Further, because the flexible workpiece is deformed into the shape corresponding to the object in advance, the flexible workpiece can be assembled onto the nonflexible object accurately.

According to a second aspect, as in the first aspect, the step of assembling the flexible workpiece with the object by the first robot and the second robot is performed while the cooperating operation of the first robot and the second robot is enabled.

Thus, in the second aspect, because the cooperating operation is used also when the flexible workpiece is pushed thereinto, the flexible workpiece can be assembled onto the nonflexible object more accurately.

According to a third aspect, as in the first aspect, the step of deforming said flexible workpiece into the shape corresponding to the nonflexible object is performed before the step of moving said flexible workpiece to said object.

According to a fourth aspect, there is provided a flexible workpiece assembling method for assembling an elongated flexible workpiece onto nonflexible object by using a first robot equipped with a first hand and a second robot equipped with a second hand, the method comprising the steps of: gripping a first portion of said elongated flexible workpiece by the first hand of the first robot and gripping a second portion of the flexible workpiece different from the first portion by the second hand of the second robot; moving the flexible workpiece to the object by enabling a cooperating operation of the first robot and the second robot; assembling one end of the flexible workpiece with the object by the first robot and the second robot by disabling the cooperating operation of the first robot and the second robot; and assembling the flexible workpiece along a surface shape of the object by the second robot.

Thus, in the fourth aspect, because the cooperating operation of the first robot and the second robot is used, the flexible workpiece can be transferred without breaking or tearing. Further, the flexible workpiece is assembled along the surface of the nonflexible object, and therefore, the flexible workpiece can be assembled onto the nonflexible object accurately.

According to a fifth aspect, as in any of the first to fourth aspects, at least one of the first robot and the second robot is equipped with a visual detection means, wherein the flexible workpiece assembling method further comprises the step of detecting the first portion and the second portion of the flexible workpiece by the visual detection means before the flexible workpiece is gripped.

Thus, in the fifth aspect, the first portion and the second portion of the flexible workpiece that should be gripped by the first hand and the second hand can be individually recognized through data of the flexible workpiece obtained by the visual detection means. Therefore, the flexible workpiece can be gripped more accurately.

According to a sixth aspect, as in any of the first to fifth aspects, at least one of the first robot and the second robot is equipped with a pushing means for pushing the flexible workpiece into the object.

Thus, as in the sixth aspect, when the flexible workpiece is pushed thereinto, manual operation by an operator can be eliminated, and therefore, the pushing operation of the flexible workpiece can be accomplished by using only the robots. The pushing means may be a dedicated tool that is attached to the hand of the robot, or an end portion of the robot may be used as the pushing means.

These and other objects, features and advantages of the present invention will be more apparent from the detailed description of the typical embodiments of the present invention shown in the accompanying drawings.

### BRIEF DESCRIPTION OF THE DRAWINGS

Fig. 1 is a diagram showing a basic configuration of a robot system that performs a flexible workpiece assembling method according to the present invention;
Fig. 2 is a flow chart showing a flexible workpiece assembling method according to a first embodiment of the present invention;
Figs. 3a - 3d are diagrams explaining the flexible workpiece assembling method according to the first embodiment of the present invention;
Fig. 4 is a flow chart showing a flexible workpiece assembling method according to a second embodiment of the present invention;
Figs. 5a - 5e are diagrams explaining the flexible workpiece assembling method according to the second embodiment of the present invention; and
Fig. 6 is a diagram showing a basic configuration of another robot system that performs a flexible workpiece assembling method according to the present invention.

### DETAILED DESCRIPTION

Hereinafter, the embodiments of the present invention will be described in detail with reference to the accompanying drawings. Throughout the drawings like elements are designated by like reference numerals. For ease of understanding, the scale of these drawings has been changed appropriately.

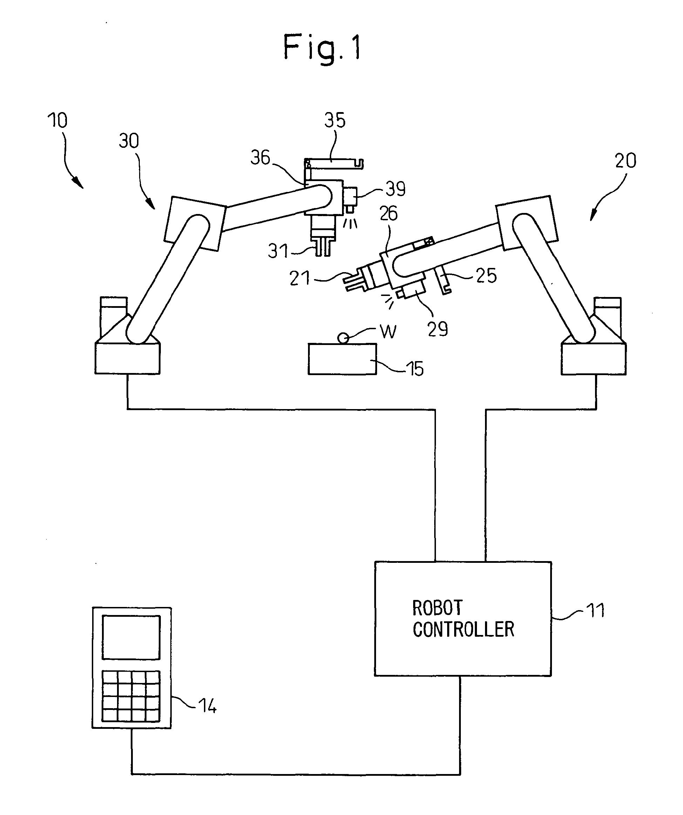

Fig. 1 is a conceptual diagram of a robot program adjustment device according to the present invention. As shown in Fig. 1, a robot system 10 includes: a first handling robot 20 (hereinafter referred to as a first robot 20) comprising a hand 21; and a second handling robot 30 (hereinafter referred to as a second robot 30) comprising a hand 31. In Fig. 1, the first robot 20 and the second robot 30 are six-degree-of-freedom articulated robot arms.

As shown in the figure, the first robot 20 and the second robot 30 comprise visual detection means or cameras 29 and 39, respectively, which are connected to a robot controller 11 described below. Further, a unit 36 comprising the hand 31 of the second robot 30 is also equipped with a pushing tool 35 disposed at a side opposite to the hand 31. A unit 26 of the first robot 20 is also equipped with a similar pushing tool 25.

Further, the robot system 10 includes: a robot controller 11 i.e., for example, a digital computer for controlling the first robot 20 and the second robot 30; and a teaching control panel 14 that is connected to the robot controller 11 and that teaches and manipulates the first robot 20 and the second robot 30.

As shown in Fig. 1, a workpiece W is loaded on a workbench 15. In the present invention, the workpiece W is a flexible member that is relatively small and relatively easy to bend, so that when workpiece W is deformed it is assembled onto nonflexible object 50 or 60. In the embodiment shown in Fig. 1 etc., the flexible workpiece W is a rubber hose, for example.

Hereinafter, the present invention will be described on the assumption that the flexible workpiece W is a rubber hose. However, the workpiece W is not limited to such a hose and it may include any flexible workpieces W. Further, though only one flexible workpiece W is shown in Fig. 1 etc., for sake of brevity, it is actually assumed that a plurality of flexible workpieces W are loaded on the workbench 15 and the first robot 20 and second robot 30 transfer the plurality of workpieces W successively one after another.

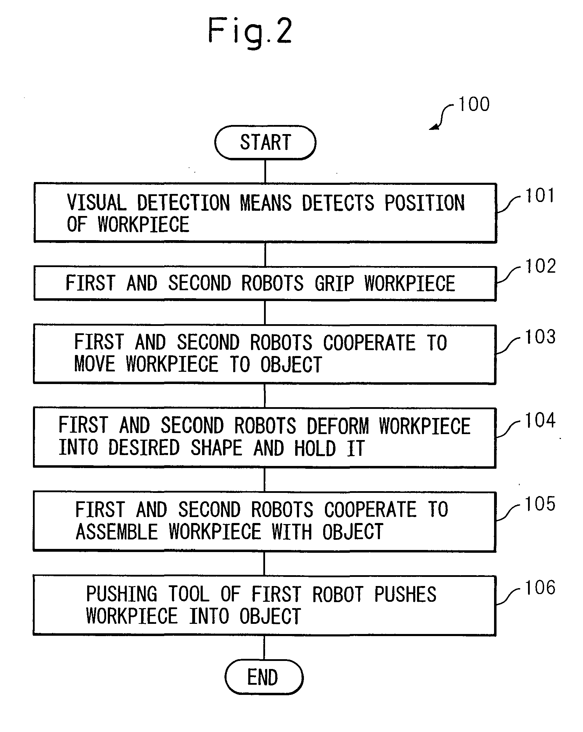

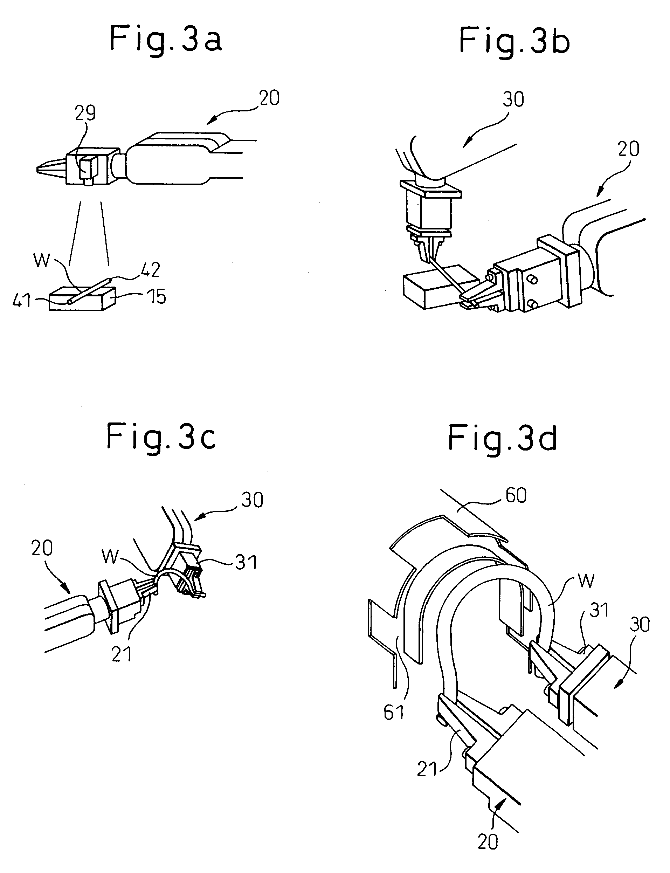

Fig. 2 is a flow chart showing a flexible workpiece assembling method according to a first embodiment of the present invention. Further, Figs. 3a - 3d are diagrams explaining the flexible workpiece assembling method according to a first embodiment of the present invention. Hereinafter, the first embodiment of the present invention will be described with reference to these drawings.

First, as shown in step 101 and Fig. 3a, the first robot 20 is moved so as to position the camera 29 above the flexible workpiece W loaded on the workbench 15. Then, the camera 29 is turned on to capture the flexible workpiece W entirely. The image obtained by the camera 29 is transferred to the robot controller 11. Alternatively, the second robot 30 may be moved so that the camera 39 can capture the flexible workpiece W.

Then, the robot controller 11 processes the image so as to detect a first portion 41 and a second portion 42 of the flexible workpiece W that should be gripped by the hands 21 and 31, respectively. The first portion 41 and the second portion 42 in the flexible workpiece W are located at positions different from each other. For example, in the embodiment shown in Fig. 3a, the first portion 41 and the second portion 42 in the flexible workpiece W are located at opposite ends of the flexible workpiece W (the rubber hose) or at positions remote from the opposite ends by predetermined distances, respectively.

Because the plurality of workpieces W are flexible, the first portion 41 and the second portion 42 are located at different positions in every workpiece W. Therefore, if the actual positions of the first position 41 and the second position 42 of the flexible workpiece W obtained through the camera 29 are different from predetermined positions, based on the differences of the first position 41 and the second position 42, the robot controller 11 corrects movement commands to move the hands 21 and 31 to the first portion 41 and the second portion 42, respectively.

Then, the camera 29 is turned off, and then, as shown in step 102 and Fig. 3b, the hand 21 of the first robot 20 and the hand 31 of the second robot 30 are moved to the first portion 41 and the second portion 42, respectively. Then, these hands 21 and 31 grip the first portion 41 and the second portion 42 of the flexible workpiece W, respectively.

Because the workpiece W is flexible, if the hand 21 grips the first portion 41 and, after that, the other hand 31 grips the second portion 42, the position of the second portion 42 may deviate. Therefore, it is preferrable that the hands 21 and 31 simultaneously grip the first portion 41 and the second portion 42, respectively. By doing this, the positional deviation of the workpiece W can be prevented and the workpiece W can be gripped accurately.

Then, as described in step 103, the first robot 20 and the second robot 30 cooperate to move the flexible workpiece W to the object 60 (not shown in the Fig. 1). It is assumed that the object 60 is a rigid body and disposed at a predetermined stationary position. Once a command for the cooperating operation is issued, the first robot 20 acts as a master and the second robot 30 acts as a slave. Therefore, when they cooperate, as the first robot 20 as the master moves toward the object 60, the second robot 30 follows the first robot 20 and moves integrally therewith.

Thus, during the cooperating operation, a relative relationship between the first portion 41 of the flexible workpiece W gripped by the hand 21 and the second portion 42 gripped by the hand 31 is maintained. Therefore, the flexible workpiece W is transferred to the object 60 while maintaining an orientation identical to that when it has been first gripped. As a result, in the present invention, when the flexible workpiece W is transferred, the flexible workpiece W is not stretched or torn off by tension and it can be transferred stably.

Then, in step 104, the cooperating operation is ended and, as shown in Fig. 3c, the first robot 20 and the second robot 30 deform the flexible workpiece W to a desired shape according to the object 60. As shown in Fig. 3d, the object 60 comprises a curved groove 61. Then, dimensional data of the object 60 comprising the groove 61 have been already input to the robot controller 11. Therefore, in step 104, based on such dimensional data, the first robot 20 and the second robot 30 bend the flexible workpiece W to a shape corresponding to the groove 61 of the object 60.

In this connection, data relating to the flexible workpiece W (dimensions, physical properties and so on) have been already input to the robot controller 11. When the flexible workpiece W is bent, such data relating to the flexible workpiece W is also referenced. As a result, the flexible workpiece W can be deformed by a force that does not break or tear off the flexible workpiece W.

Then, as shown in step 105 and Fig. 3d, while keeping the shape of the flexible workpiece W after the deformation, the first robot 20 and the second robot 30 insert the flexible workpiece W into the groove 61 of the object 60 and assemble the flexible workpiece W with the object 60. In the present invention, because the flexible workpiece W is deformed to the shape corresponding to the object 60 in advance, the flexible workpiece W can be accurately assembled with the object 60. After the flexible workpiece W is assembled with the object 60, the flexible workpiece W is released from the hands 21 and 31.

When the flexible workpiece W is assembled onto the nonflexible object 60, it is preferable to use the cooperating operation described above again, so that the flexible workpiece W can be inserted into the groove 61 of the object 60 more accurately. However, in step 105, because the flexible workpiece W has already been moved to the nonflexible object 60, the moving distance of the flexible workpiece W is relatively small when the flexible workpiece W is assembled with the object 60. Therefore, the cooperating operation between the first robot 20 and the second robot 30 does not always have to be used.

Even after the flexible workpiece W is assembled with the object 60, there may be a case in which the flexible workpiece W is not completely inserted into the interior of the groove 61 of the object 60. In such a case, the process proceeds to step 106. In step 106, the unit 26 of the first robot 20 is driven to direct the hand 21 rearward and direct the pushing tool 25 toward the tip of the first robot 20.

Then, the pushing tool 25 is operated so as to completely push the flexible workpiece W into the groove 61 of the object 60. Thus, the pushing tool 25 helps to assemble the flexible workpiece W onto the nonflexible object 60. Therefore, in the present invention, the flexible workpiece W can be completely pushed into the groove 61 by only using the first robot 20 and the second robot 30, and as a result, when the flexible workpiece W is assembled onto the nonflexible object 60, manual operation by an operator can be eliminated.

In place of the pushing tool 25 of the first robot 20, the pushing tool 35 of the second robot 30 may be used or, alternatively, both of the pushing tools 25 and 35 can be used to push the flexible workpiece W into the groove 61. Further, the dedicated pushing tools 25 and 35 do not always have to be used, and end or side portions of the hands 21 and 31 may alternatively be used to push the flexible workpiece W into the groove 61.

As described above, the first robot 20 and the second robot 30 can cooperate to transfer the flexible workpiece W stably without breaking or tearing. Further, the flexible workpiece W is assembled onto the nonflexible object 60 after the first robot 20 and the second robot 30 deforms the flexible workpiece W into a shape corresponding to the object 60 and, therefore, the flexible workpiece W can be accurately assembled.

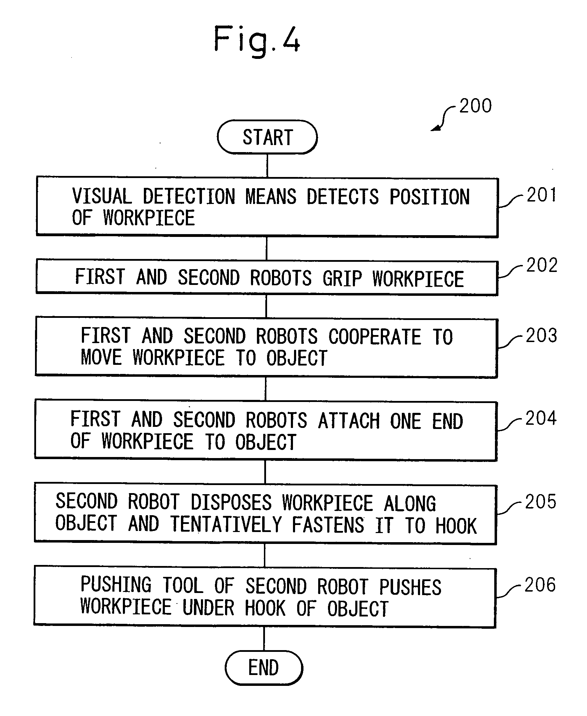

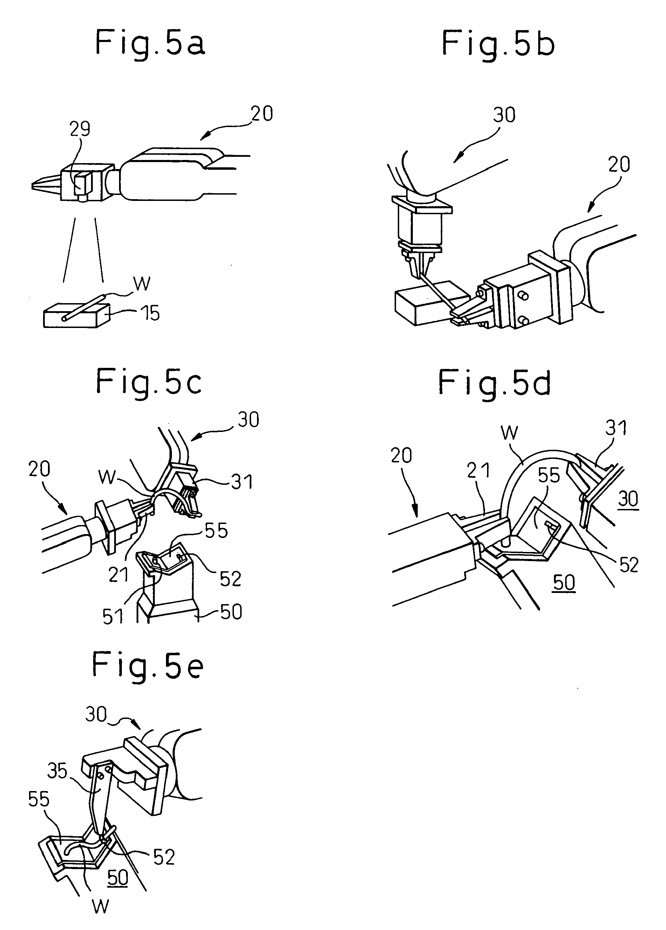

Fig. 4 is a flow chart showing a flexible workpiece assembling method according to a second embodiment of the present invention. Further, Figs. 5a - 5e are diagrams explaining the flexible workpiece assembling method according to the second embodiment of the present invention. Hereinafter, the second embodiment of the present invention will be described with reference to these drawings, but steps 201 - 203 in Fig. 4 and Figs. 5a - 5c are identical to steps 101 - 103 and Figs. 3a - 3c and, therefore, the description of them is omitted.

As shown in Fig. 5c and so on, an object 50 in the second embodiment comprises a curved top face 55. Further, the top face 55 is provided with: a plug 51 for inserting therearound one end of the flexible workpiece W as the rubber hose; and a hook 52 for holding such flexible workpiece W.

In the second embodiment, after the flexible workpiece W is deformed, as shown in step 204 and Fig. 5d, the first robot 20 and the second robot 30 are moved so as to insert one end (at the side of the first portion 41) of the flexible workpiece W is inserted around the plug 51 of the object 50. After the one end of the flexible workpiece W is inserted around the plug 51, the hand 21 of the first robot 20 releases the flexible workpiece W.

Then, as described in step 205, the second robot 30 is moved so as to dispose the flexible workpiece W along the top face 55 of the object 55. Then, the second robot 30 is further moved so that the flexible workpiece W is pinched by the hook 52 and tentatively fastened. After that, the hand 31 of the second robot 30 releases the flexible workpiece W.

Eventually, as shown in step 206 and Fig. 5e, the unit 36 of the second robot 30 is driven to direct the hand 31 rearward and direct the pushing tool 35 toward the tip of the first robot 30. Then, the pushing tool 35 is operated to push the flexible workpiece W under the hook 52 of the object 50 so that the flexible workpiece W is completely engaged with the hook 52. As a result, also when the flexible workpiece W is assembled with the object 50, the manual operation by the operator can be eliminated.

As described above, in the second embodiment of the present invention, similarly to the first embodiment, the flexible workpiece W can be transferred stably without breaking or tearing off due to the cooperating operation. Further, in the second embodiment, the flexible workpiece W can be assembled along the top face 55 of the object 50 and, as a result, the flexible workpiece W can be assembled with the object 50 accurately.

In this connection, though not shown in the figures, when the object 50 has a cylindrical shape and the plug 51 is provided on a surface other than a circumferential surface, for example, on an end face of the object 50, the second robot 30 may wrap the flexible workpiece W around the object 50 after the flexible workpiece 50 is inserted around the plug 51. It will be apparent for those skilled in the art that the effects similar to those described above can be obtained also in this case.

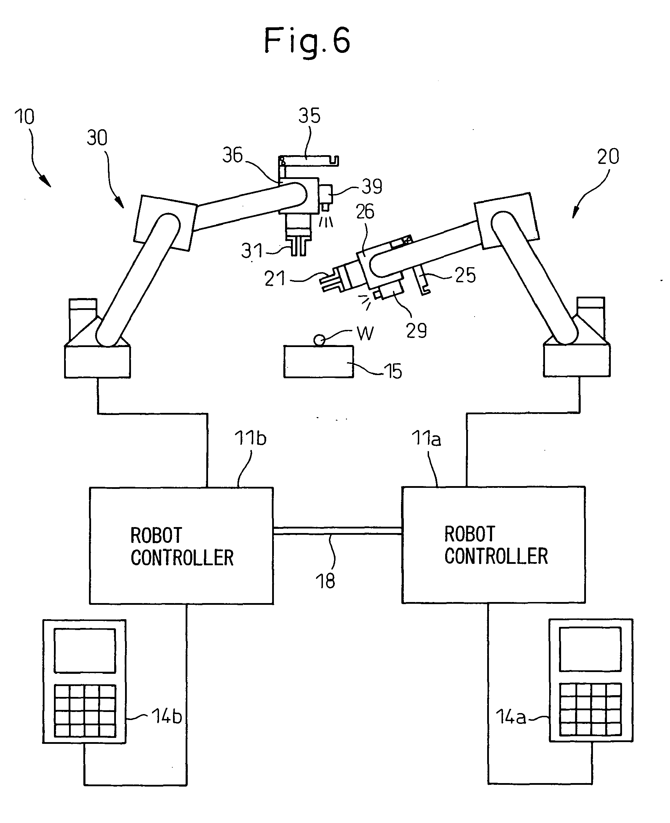

Fig. 6 is a diagram showing a basic configuration of another robot system that performs a flexible workpiece assembling method according to the present invention. In Fig. 6, the first robot 20 is connected to a robot controller 11a comprising a teaching control panel 14a, and the second robot 30 is connected to a robot controller 11b comprising a teaching control panel 14b. As shown in Fig. 6, the robot controller 11a and the robot controller 11b are interconnected via a communication means 18 such as, for example, Ethernet (a registered trademark). In this case, various data such as, image data obtained by the camera 29 is sent from the robot controller 11a to the robot controller 11b via the communication means 18. Further, when the first robot 20 and the second robot 30 cooperate to operate, the communication means 18 is used as appropriate. It will be apparent that the effects similar to those described above can also be obtained in the robot system shown in Fig. 6.

While the present invention has been described with reference to the typical embodiments, those skilled in the art can understand that the changes described above and other various changes, omissions or additions can be made without departing from the scope of the present invention.

## Claims

1. A flexible workpiece assembling method for assembling a flexible workpiece (W) onto a nonflexible object by using a first robot (20) comprising a first hand (21) and a second robot (30) comprising a second hand (31), the method comprising the steps of:
gripping a first portion (41) of said flexible workpiece (W) by said first hand (21) of said first robot (20) and gripping a second portion (42) of said flexible workpiece (W) different from said first portion (41) by said second hand (31) of said second robot (30);
moving said flexible workpiece (W) to said nonflexible object by enabling a cooperating operation of said first robot (20) and said second robot (30);
deforming said flexible workpiece (W) into a shape corresponding to said nonflexible object by changing positions and orientations of said first robot (20) and said second robot (30) independently of each other while the cooperating operation of said first robot (20) and said second robot (30) is disabled; and
assembling said flexible workpiece (W) onto said nonflexible object by said first robot (20) and said second robot (30).

2. A flexible workpiece assembling method according to claim 1, wherein the step of assembling said flexible workpiece (W) with said object by said first robot (20) and said second robot (30) is performed while the cooperating operation of said first robot (20) and said second robot (30) is enabled.

3. A flexible workpiece assembling method according to claim 1, wherein the step of deforming said flexible workpiece (W) into the shape corresponding to said nonflexible object is performed before the step of moving said flexible workpiece (W) to said nonflexible object.

4. A flexible workpiece assembling method for assembling an elongated flexible workpiece (W) on a nonflexible an object by a first robot (20) comprising a first hand (21) and a second robot comprising a second hand (31), the method comprising the steps of:
gripping a first portion (41) of said elongated flexible workpiece (W) by said first hand (21) of said first robot (20) and gripping a second portion (42) of said flexible workpiece (W) different from said first portion (41) by said second hand (31) of said second robot;
moving said flexible workpiece (W) to said nonflexible object by enabling a cooperating operation of said first robot (20) and said second robot (30);
assembling one end of said flexible workpiece (W) with said nonflexible object by said first robot (20) and said second robot (30) by disabling the cooperating operation of said first robot (20) and said second robot (30); and
assembling said flexible workpiece (W) along a surface shape of said nonflexible object by said second robot (30).

5. A flexible workpiece assembling method according to any of claims 1 - 4, wherein at least one of said first robot (20) and said second robot (30) comprises a visual detection means (29, 30),
wherein the flexible workpiece (W) assembling method further comprises the step of detecting said first portion (41) and said second portion (42) of said flexible workpiece (W) by said visual detection means (29, 30) before the flexible workpiece (W) is gripped.

6. A flexible workpiece assembling method according to any of claims 1 - 5, wherein at least one of said first robot (20) and said second robot (30) comprises a pushing means (35) for pushing said flexible workpiece (W) into said object.
